# EUROPEAN PATENT APPLICATION

(11) **EP 3 252 677 A1**
(43) Date of publication of application: **06.12.2017**
(21) Application number: 16172511.4
(22) Date of filing: 01.06.2016
(51) Int. Cl.: G06K 19/077

(54) **A PCMCIA CONTACTING UNIT**

(71) Applicant: SmarDTV S.A., 1033 Cheseaux-sur-Lausanne (CH)
(72) Inventor: DELANDE, Laurent, 13600 La Ciotat (FR); GAY, Paul, 13390 Auriol (FR)
(74) Representative: Leman Consulting S.A.

(57) **Abstract**

The present invention relates to a PCMCIA contacting unit for a conditional access module. The innovative contacting unit is economic to manufacture and provides enhanced flexibility for customising the unit to a client's preferences while meeting the physical and mechanical constraints required of a conditional access module for insertion into the slot of a host device.

## Description

### TECHNICAL DOMAIN

The present disclosure generally relates to the domain of Personal Computer Memory Card International Association-compatible (PCMCIA-compatible) contacting units such as a conditional access module for insertion into the PCMCIA slot of a host device.

### BACKGROUND

The state of the art includes PCMCIA-compatible conditional access modules. These devices are invariably made from sheet metal in order to meet the tight physical requirements to allow for their unhindered insertion into their host's PCMCIA slots, the metal thereby also providing electromagnetic interference shielding (EMI shielding), which is appreciable when the conditional access modules include components which operate at radio frequencies.

Conditional access modules usually provide for secure operations to be performed, such as decryption of paid media content, and so such modules should be tamperproof. As such, conditional access modules are usually provided in sealed casings. Metal provides the most convenient compromise to achieve reliable sealing while complying with the required physical constraints described above. This generally dictates the standardised look of these devices - a rectangular sheet-metal box having a width of a standard credit card and a length similar to that of a standard credit card. Content owners who provide conditional access modules to their end users generally apply adhesive stickers to the devices thereby providing a medium upon which their company logos or other distinguishing aesthetic features can be applied in order to distinguish their own devices from those of their competitors.

### BRIEF DESCRIPTION OF THE DRAWINGS

The present invention will be better understood thanks to the detailed description which follows and the accompanying drawings, which are given as non-limiting examples of embodiments of the invention, namely:
figure 1, showing a state of the art PCMCIA contacting unit and part of a chip card for insertion into a slot of the contacting unit;
figure 2, showing a state of the art Type II PC Card;
figures 3A to 3E, showing different views of a state of the art Type II PC Card, giving various package dimensions with acceptable tolerances;
figure 4, showing a detailed view of the connector end of a state of the art PCMCIA contacting unit;
figure 5, showing a cross-sectional view of the connector end of a state of the art PCMCIA contacting unit;
figure 6, showing a detailed view of the (PCMCIA) connector from a state of the art PCMCIA contacting unit;
figure 7, showing an embodiment of a PCMCIA contacting unit according to the present disclosure;
figure 8, showing a side view of the embodiment of figure 7;
figure 9, showing a top view of the embodiment of figure 7;
figure 10, showing the inside of a first cover (right side of figure) and the inside of a second cover (left side of figure) of an embodiment of a PCMCIA contacting unit according to the present disclosure, the first cover having a circuit board and a PCMCIA connector fitted;
figure 11, showing a view of an embodiment of a PCMCIA contacting unit according to the disclosure, in which the first cover is visible (on the top);
figure 12, showing the embodiment of figure 11, where the second cover is visible at the bottom;
figure 13, showing a side view of the embodiment of figure 11;
figure 14, showing a cut-away side view of the embodiment of figure 11;
figure 15, showing a cut-away side view of another embodiment of a PCMCIA contacting unit according to the present disclosure;
figure 16, showing detail of part of an attachment region in one embodiment of a PCMCIA contacting unit according to the present disclosure;
figure 17, showing detail of part of an attachment region in another embodiment of a PCMCIA contacting unit according to the present disclosure;
figure 18, showing a top view of an embodiment of the PCMCIA contacting unit disclosed herein, where the shape of the circuit board and borders for the possible attachment area are visible in crosshatch;
figure 19, showing a top view of another embodiment of the PCMCIA contacting unit disclosed herein, where the shape of the circuit board and borders for the possible attachment area are visible in crosshatch;
figure 20, showing a detailed view of a cut-away of an end of a PCMCIA contacting unit according to an embodiment described herein;
figure 21, showing a connector for use in an embodiment of a PCMCIA contacting unit described herein;
figure 22, showing a detailed view of an end of an embodiment of a PCMCIA contacting unit which uses the connector of figure 21;
figure 23, showing a detailed view of the end of the PCMCIA contacting unit of figure 22, where the second cover has been removed to allow attachment regions, coupling region of the connector with the first cover and the location shapes to be seen;
figure 24, showing a lateral view of a PCMCIA contacting unit according to an embodiment described herein, before the first and second covers are attached; figure 25, showing an end view of a PCMCIA contacting unit according to an embodiment described herein, before the first and second covers are attached; figure 26, showing a three-dimensional view of a PCMCIA contacting unit according to an embodiment described herein, before the first and second covers are attached;
figure 27, showing yet another embodiment of the contacting unit described herein, where the second cover has been removed to leave visible the circuit board with its and resilient contacts and retaining bracket;
figure 28, illustrating the embodiment of figure 27 with a chip card inserted;
figure 29, showing detail of an embossed pattern on a cover of a PCMCIA contacting unit as described herein;
figure 30, showing a schematic of a top view of either a first or a second cover of still another embodiment of a PCMCIA contacting unit described herein;
figure 31, showing a cross-sectional view of an end of an embodiment of the PCMCIA contacting unit described herein, where various dimensions of the unit are seen; and
figure 32, showing a three-dimensional view of an end of an embodiment of the PCMCIA contacting unit described herein, where various dimensions of the unit are seen; and

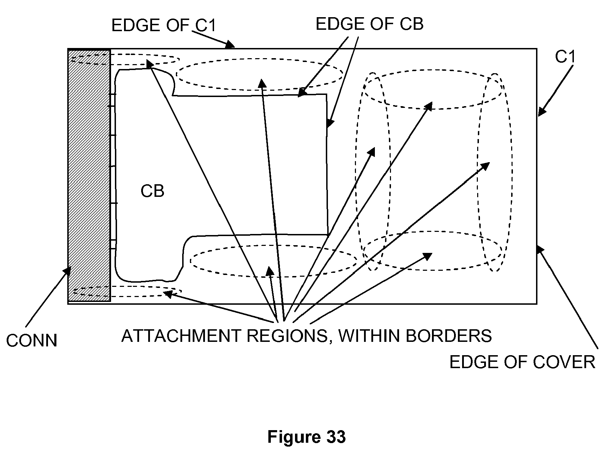

figure 33, showing possible attachment regions of a cover of a PCMCIA contacting unit according to an embodiment disclosed herein.

### DETAILED DESCRIPTION

Provision is made for a new type of PCMCIA contacting unit, compatible with PCMCIA size and connectivity standards. The contacting units disclosed herein are readily customisable to meet different requirements of different customers using readily available manufacturing techniques to provide flexible and cost-effective manufacturability of the units.

Different embodiments of the contacting units described herein can be used with a smartcard, a SIM card, micro-SIM card and the like, with other embodiments being suitable for cardless configurations. Contacting units provided for in the present disclosure may find use in conditional access modules for example. Conditional access modules (CAM) may provide decryption functionality to give secure access to protected digital media content.

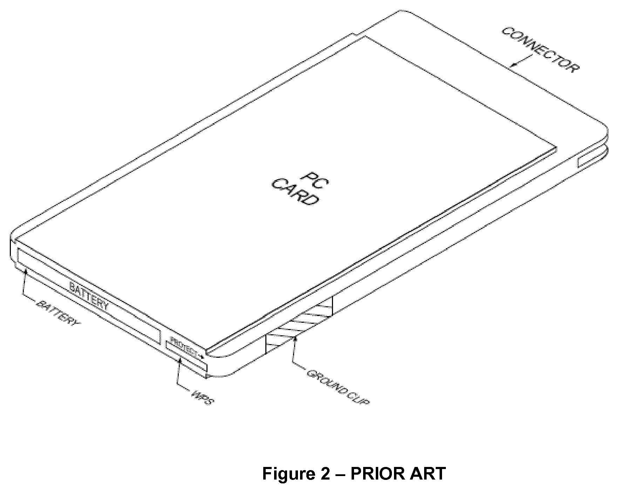

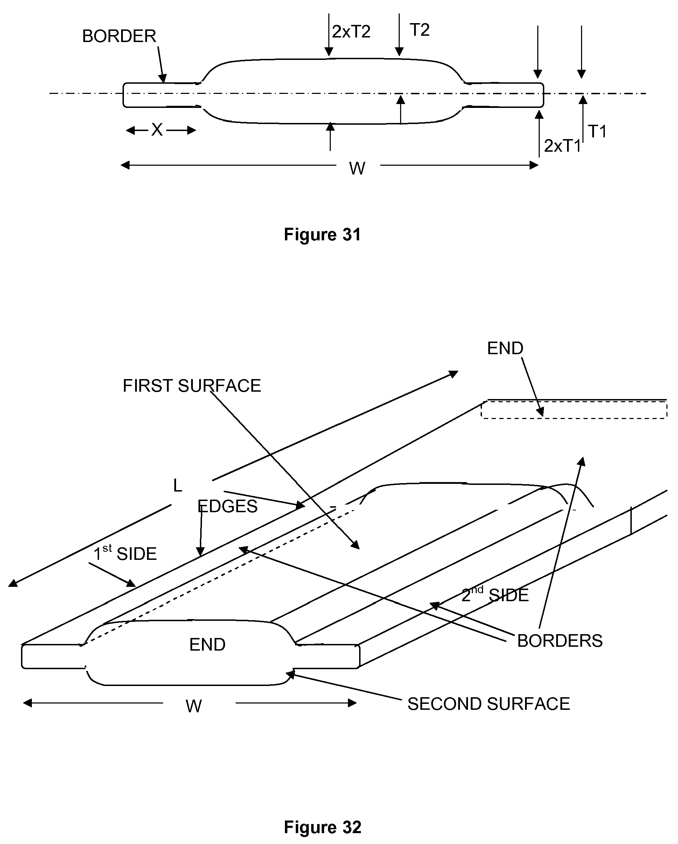

A conditional access module may be described as an electronic circuit. The electronic circuit is usually included in a circuit board or a PCB (printed circuit board) connected to a PCMCIA connector. There is disclosed a PCMCIA contacting unit for a conditional access module, the unit extending lengthwise between first and second ends of the unit and widthwise between first and second sides of the unit. As well as the circuit board with the electronic circuit of the conditional access module and the PCMCIA connector for connecting physically and electrically to a host device, the unit has a casing comprising top and bottom covers with the PCB and electronic circuit sandwiched there-between. The terms "top" and "bottom" are conventional terms which should not be taken to limit its position in the casing. For example, the top cover could be on the bottom and vice versa. The roles of the top and bottom covers may therefore be inversed. The terms "first" and "second" may therefore equally be used to describe the two covers. The unit may have a first height near its centre (figure 31, 2xT2), sufficiently high to house electronic components of the electronic circuit yet sufficiently low to fit into a PCMCIA slot, and it may have a second height (figure 31, 2xT1), less that the first height near the sides of the unit so that it can be easily inserted into the guides of a PCMCIA slot. The first and second covers are preferably made from plastics. In some embodiments the covers may comprise some metal or be otherwise metalised. The covers may be described as being substantially planar in the sense that the casing made therefrom must be able to fit into the PCMCIA slot of a host device, said slot complying with the PCMCIA-specified dimensions. In this sense, an embodiment of the casing may have covers having a slight curvature, as long as the casing will fit into a PCMCIA slot. The covers have attachment regions where attachment between the covers is made between plastic parts on parallel-opposing faces of each of the covers. The attachment regions on each of the cover faces are located such that they coincide when the covers are fitted together to form the casing. The face of a cover is defined as being the planar part of the cover and not the side or the edge. In order to provide sufficient borders where such attachment can be made, the circuit board is provided with a suitable shape. The electronics on the board may be optimised such that the components can be located on the board near the centre of the casing in the widthwise direction and towards the PCMCIA connector. In some embodiments a modified PCMCIA connector may be used.

According to different embodiments, the attachment between the covers of the casing may be made by welding, soldering, ultra-sonic (ultrasound) bonding, adhesive bonding or latching for example.

Top and bottom covers are also referred to as first and second covers, respectively, in the present disclosure to show that the top cover may appear at the bottom and the bottom cover may appear at the top and that features related to one cover may be related to the other instead. By arranging for the attachment between the first and second covers to occur in plastic, it is ensured that optimal strength of bonding between the covers is achieved. Bonding by soldering or welding plastic parts provides for a very strong bond between the covers, thereby providing a secure and robust casing. Preferably, the covers are made entirely from plastics, thereby allowing for easy and cost-effective customising to meet customer's needs. For example, plastics can be easily produced in many different colours without affecting the bond strength. Metal on the other hand, has a disadvantage in that it is more difficult to achieve a strong weld once it is painted. It may therefore be prohibitively expensive to adapt the manufacturing process to achieve a sufficiently strong weld when using painted metal. Furthermore, different shapes are readily realisable using plastics and different textured effects can be readily achieved on the surface of the plastic. For example, customers' logos or slogans can easily be embossed on a plastic cover.

Further disadvantages of metal contacting units are the cost of the material. The circuit board in prior art units, which is of substantially the same dimensions as the casing, is also expensive in terms of material costs.

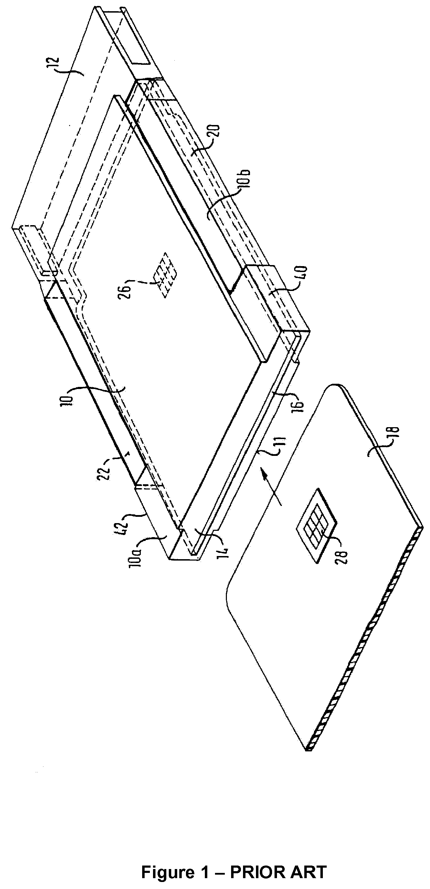

Figure 1 shows a contacting unit for a PCMCIA conditional access module from the state of the art. Such contacting units are made from sheet metal in order to be able to meet the tight tolerances imposed by the PCMCIA standard to allow for a credit card sized smartcard to be held within a slot of the contacting unit and for the whole assembly, including the contacting unit and the card, to be inserted without hindrance into a PCMCIA slot of a host device, the slot having a width dimension which is substantially the same as that of a credit card. This contacting unit generally has a first cover and a second cover both having a length and a width as defined by the PCMCIA standard, a circuit board having substantially the same width and length as the covers and having a PCMCIA connector at one end. The printed circuit board, or PCB, provides the functionality of the module e.g. the conditional access functionality. The unit generally has a slot for insertion of a smartcard. The first and second covers (10, 11) usually have tabs (40, 42), which wrap around the sides of the unit (20, 22) at or near the front and back ends of the unit (10a, 12) and the tabs are usually welded or soldered together to form a housing to enclose the circuit board (16) and to receive the smartcard (18), usually via the slot (14) which is at one of the ends. The assembly region of known contacting units is therefore kept well away from the functionality region in order to meet all imposed constraints.

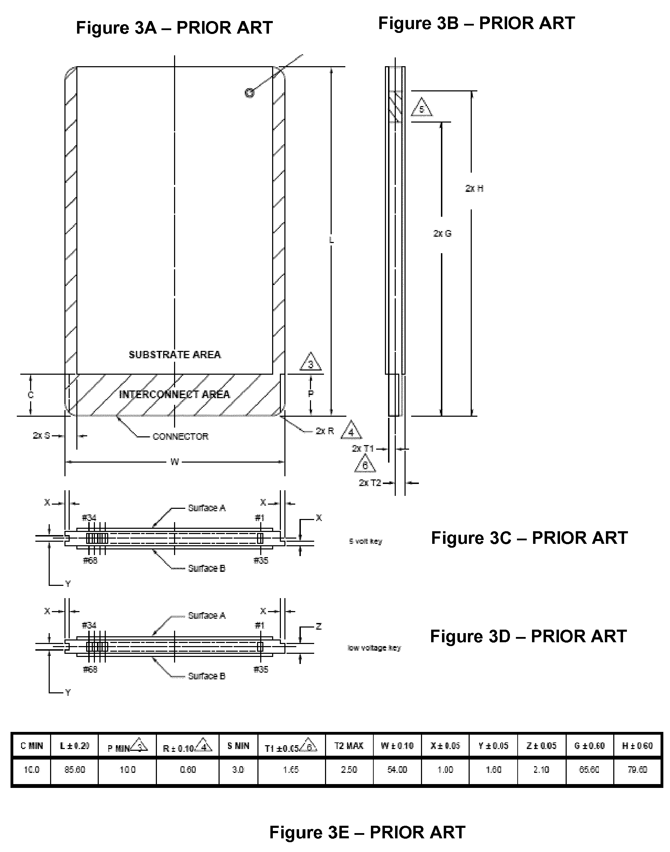

State of the art PCMCIA contacting units, especially PCMCIA conditional access modules, are built to the same physical dimension standards as Type II PC Cards, a well-known standard for computer memory expansion. Figure 2 shows a PC Card and figures 3A to 3E show the dimensions and tolerances allowed by the specification. All embodiments of the present disclosure adhere to these dimensional standards. According to the standard, the width of the unit should be 54.00mm (+/-0.10mm), and the height or thickness should be 5mm at most. This goes for any part of the unit which is intended to be inserted into the PCMCIA slot of a host device. Parts of the unit which are intended to remain outside of the host device's PCMCIA slot may exceed these dimensions.

State of the art contacting units are made from sheet metal in order to meet the tight mechanical tolerances required of them and in order to provide a robust and long-lived unit having good EMI shielding properties. Welding or soldering of first and second covers of the units is easy to accomplish to provide a sufficiently robust casing. In order to meet all of these constraints, different manufacturers usually end up producing similar-looking contacting units. In order to differentiate their units from one another, the most economical way has been found to be to stick a paper sticker with a company logo or company colours onto the unit. The units can be personalised for particular customers in the same way. Stickers are preferred as a cheaper and more convenient solution over painting the metal of the housing because paint can weaken the solder or welding joint. This means extra process steps for preparing stickers and placing them on the modules. There is a need to be able to provide customers with new ways of customising their contacting units (for example, different shapes, colours, texture effects, etc.), which can be achieved using standard manufacturing process thereby providing economic, practical, convenient and flexible customisation methods.

Reliable assembly of the components making up the contacting unit, notably the attachment of first and second covers, is critical. Once metal parts have been painted it is more difficult to fix the parts together. A painted or otherwise coloured plastic part, when welded or soldered to another coloured plastic part, produces a very strong bond on the other hand. However, the state of the art teaches away from using plastic parts for PCMCIA contacting units because the manufacturing tolerance for meeting the required dimension tolerances given the other constraints of fitting a circuit board and electronic circuits inside the unit can only be met when sheet metal is used for the covers.

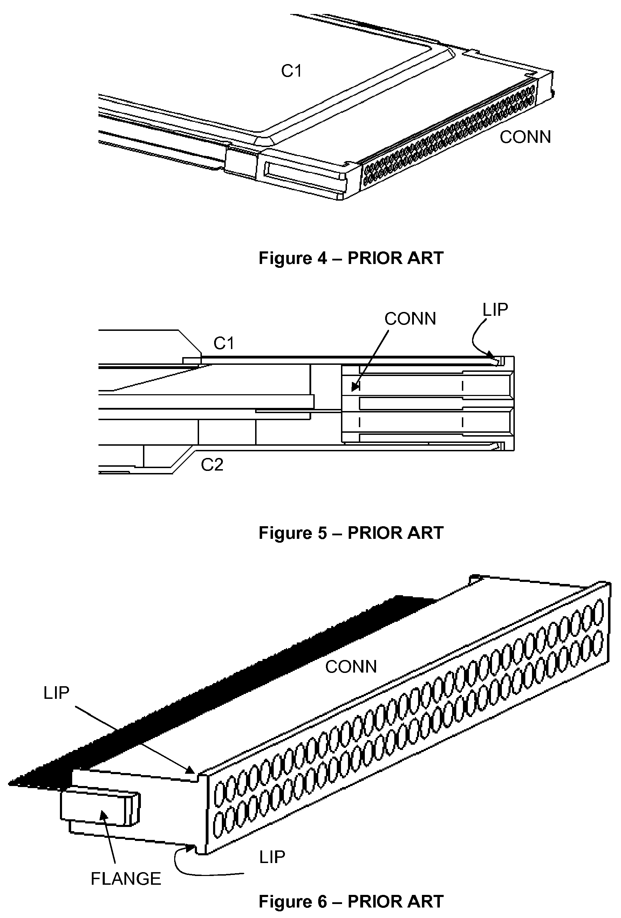

Figures 4 and 5 show state of the art PCMCIA-compatible contacting units where detail of the connector end can be seen. Figure 6 shows the connector alone. It can be seen that the connector has a small lip. The total height of the connector, including these small lips, has to be such that it meets the 5mm specification. The connector has a small flange which is used for guidance. The covers of the unit have to come up over the top of the connector till they reach the lips (LIP) of the connector (CONN). There is about 10mm of overlap of the metal onto the top of the connector. The height of the lip is such that only sheet metal can be made thin enough to come over the top of the connector and still allow for the unit to meet the thickness specification.

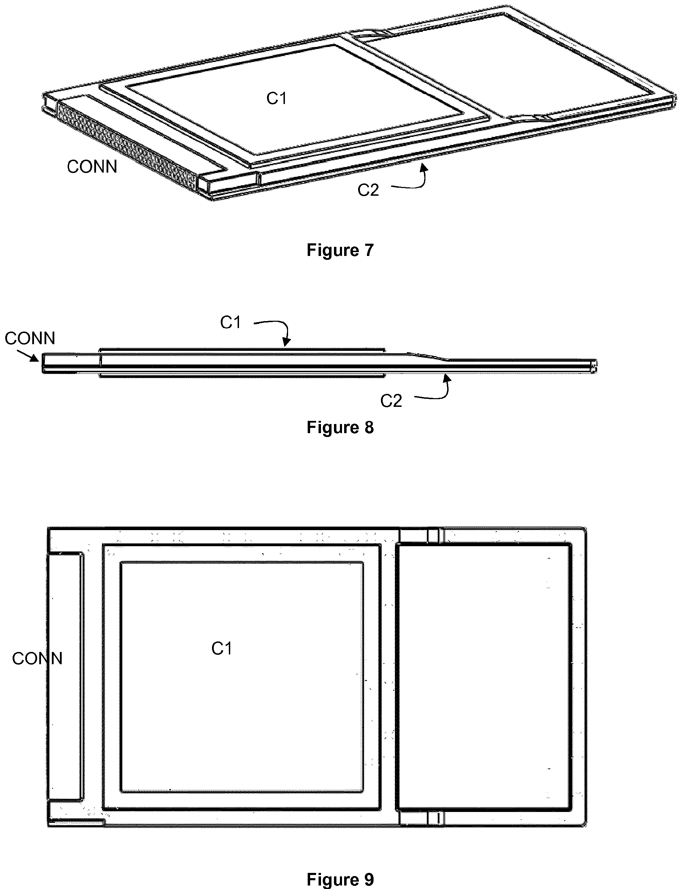

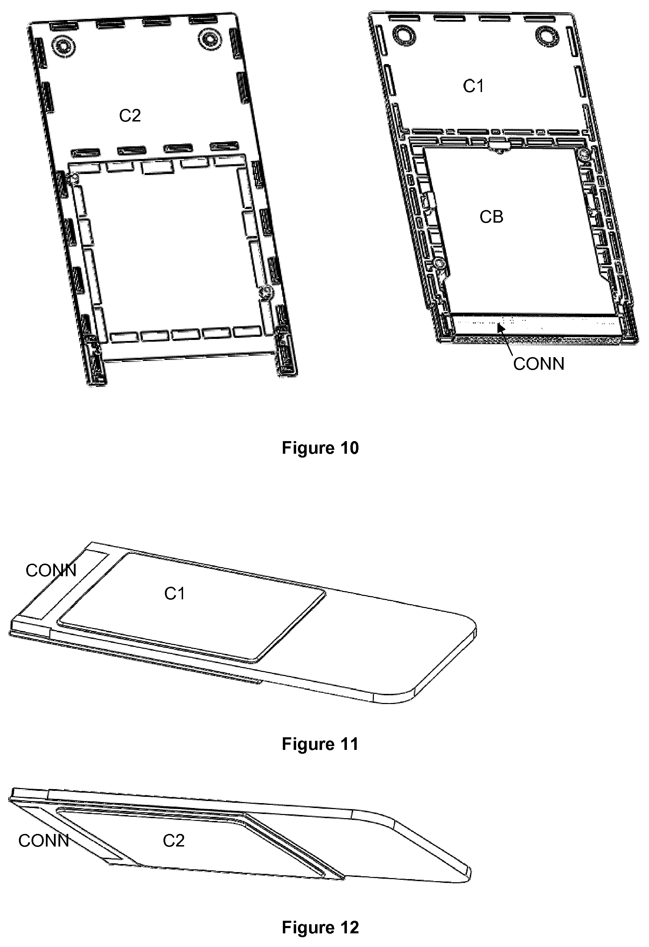

Figures 7, 8 and 9 show different views of an embodiment of a PCMCIA contacting unit providing the advantages mentioned above, among others. Figure 10, showing the inside of an embodiment, shows a first cover (C1) (on the right) with a printed circuit board (CB) (circuit board for housing an electronic circuit of the unit) assembled therein as well as a connector (CONN) to provide connectivity between the electronic circuit and a host device having a PCMCIA slot. A second cover (C2) is shown on the left hand side. According to an embodiment, both covers are made from plastics. It has been arranged for the circuit board to be smaller than the standard board, with the circuit being placed close to the connector. In all embodiments, the circuit board has a reduced size in both length and width directions compared to the standard board. Preferably, the reduction in length is sufficient to provide enough space to accommodate the attachment features and/or the guidance features for attaching the covers as described herein. According to some embodiments, the circuit board may be greatly reduced in the length direction when compared to the standard board, with the length being half that of the standard board, or even less. Borders are thereby provided on the covers and around the circuit board, between the edges of the circuit board and the respective adjacent edges of the two types of covers. Within these borders are attachment areas, where plastic attachment parts on one cover cooperate with corresponding plastic attachment parts on the opposite cover.

According to different embodiments, the plastic attachment parts of the covers are arranged so that the attachment between the covers is provided by soldering, spot welding, ultrasound welding, adhesive attachment, snap-fitting or latching. Consequently, embodiments are described having covers attached to each other by a spot weld, an ultrasound weld, an adhesive attachment, a snap-fitting arrangement or a latch. A casing according to an embodiment, which has had its covers attached by a spot weld may have a plurality of spot weld points making up the spot weld. Similarly, an ultrasound weld may be made up of a number of ultrasound weld points.

Figure 10 illustrates inside views of the first and second cover of an embodiment of the contacting unit where the two covers are substantially equal in length. Substantially equal in length is taken to mean equal in length to within normal manufacturing tolerance for a plastic cover for a PCMCIA contacting unit. The borders of the unit, where attachment may occur, can be seen in the illustration, between the edges of the covers and the edge of the circuit board and at an end of the covers between the edge of the circuit board and the edge at an end of the cover. The plastic parts where attachment occurs can be seen in the attachment areas. Also illustrated are guidance pins or locating pins in attachment regions within the borders.

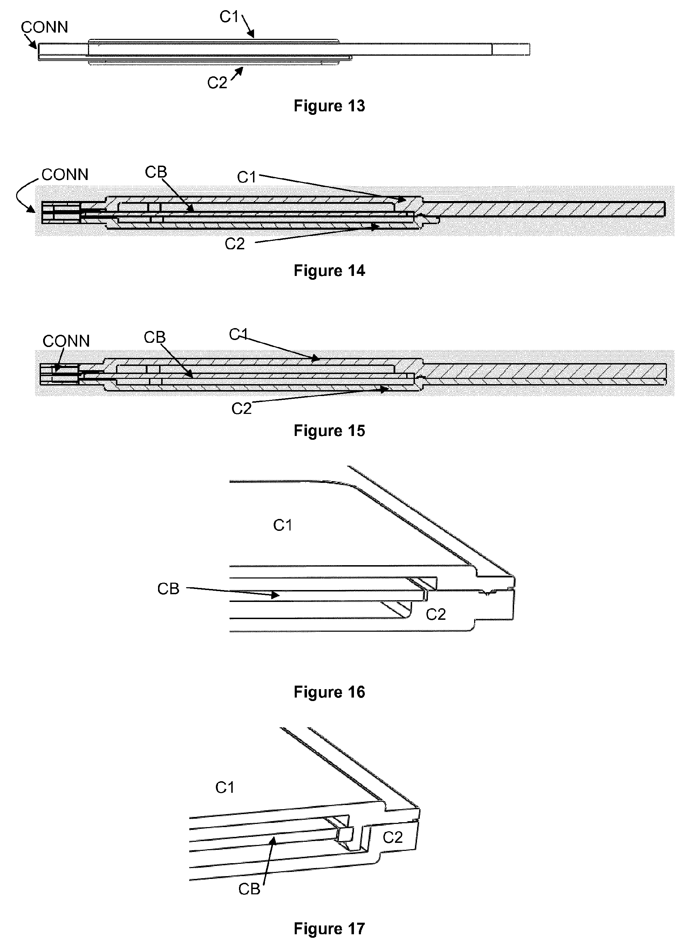

Figure 11 and figure 12 both show units according an embodiment. In this embodiment, the first cover extends the full length of the unit. This can be seen in figure 11 showing a top view of the unit. Figure 12 shows a view from the bottom of the unit. It can be seen that the second cover does not extend the full length of the unit. Figures 13 and 14 show the same embodiment viewed from the side, where it can be seen that the length of the second cover is shorter than that of the first cover. Figure 15, on the other hand, shows a different embodiment, in which the first and second covers are of substantially the same length. Embodiments of the contacting unit described herein can have second covers either the same length as the first cover or shorter than the first cover. The shortest length of second cover is a length which covers the circuit board and provides a sufficient margin to allow for adequate attachment and/or guidance features to be placed in the attachment region within the border.

Figure 16 gives a more detailed view of part of an attachment region of an embodiment of a contacting unit disclosed herein. The plastic attachment parts are arranged to be soldered together. The attachment parts are on the opposing flat surfaces of the covers in order to achieve a strong bond. To provide sufficient area for the strong bond, the bond has to be made outside of the region where the circuit board is located. This can be achieved by making the circuit board smaller where the bond is to be made. The height (or thickness) of the unit where the circuit components (electronic components of the circuit board) are located may be greater than the height of the unit at the attachment regions as long as the greater height is within the limit specified for the unit to be able to fit into a PCMCIA slot. By arranging for the attachment regions to be outwith the area where the circuit board is, it can be further ensured that the tolerance for the height of the unit will be met at the edges where the unit is guided into the PCMCIA slot, thereby providing unhindered movement of the unit into the slot. Figure 17 shows a different attachment method, meeting all of the requirements which are achieved using the soldering technique. In this embodiment the covers are configured to be latched together at the plastic attachment parts. Plastic is suitably resilient to allow adequately shaped parts to be pushed against each other until they lock, thereby providing a secure attachment.

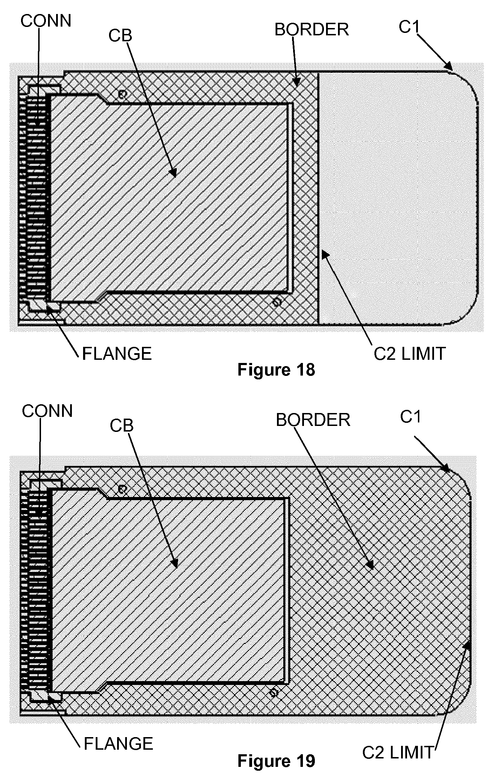

Figure 18 provides a top view of an embodiment where the first cover is longer than the second cover. The attachment region is within the border, which is shown in cross-hatch. The PCMCIA connector can be seen on the left and the specially adapted PCB (circuit board (CB)) is shown with oblique lines. Locating elements are also shown as small circles, allowing for proper alignment of the two covers during manufacture. Figure 19 provides a top view of an embodiment where both covers have substantially the same length. In this embodiment, the border between the edge of the end of the circuit board and the edge of the end of the contacting unit is very much larger, providing a larger area where the attachment of the covers is possible. Both figures illustrate clearly the reduced size of the circuit board. The electronics of the circuit board has to be adapted to fit into the smaller area, which is necessary to provide sufficient area on the flat, opposing surfaces of the covers to be properly attached to each other. The smaller board and the plastic elements contribute to the optimisation of the manufacturing costs of the contacting units.

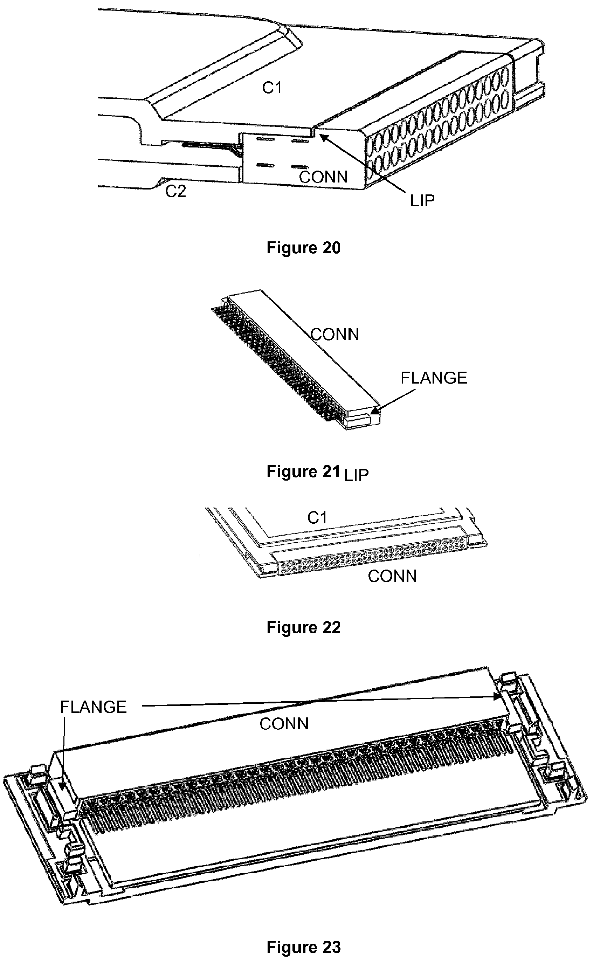

Particular attention has to be paid to the way in which the connector (CONN) and the covers (C1, C2) cooperate with each other to provide a sufficiently rigid and robust contacting unit. As in state of the art contacting units, the connector (CONN) is usually soldered to the circuit board to provide electrical connectivity to the electronic circuit on the board. The solder joint is not sufficient to provide the required robustness and rigidity and so it is arranged for the top and bottom covers to come to the end of the connecter and abut against the lip which is provided thereat. This provides about 10mm of overlap of the metal casing over the body of the connector. In embodiments of the contacting unit described herein, provision is also made for the covers and the connector to cooperate with each other to give a rigid and robust structure. According to one embodiment, the lip of the connector is modified so that the thicker plastic cover can sit on top of the main body of the connector without infringing the maximum height requirement of the contacting unit. In other words, the lip is higher, but since the total height of the connector cannot be higher than the standard, the height of the main body of the connector is reduced when compared to a standard PCMCIA connector. Figure 20 shows an example of such an embodiment, where the lip appears on only the top of the connector. One way of achieving this is to reduce the height of the connector by about 0.5mm everywhere apart from at the lip, so that the edge of the plastic cover can come up to the end of the connector, making the connection between cover and connector stronger. The value of 0.5mm is chosen as being a minimum thickness which is readily achievable in manufacturing of plastic covers described herein. In another variant of this embodiment, the lip may appear on both sides, so that the second cover can also overlap part of the connector. In this embodiment, the connector may have a small flange (usually two small flanges - one on either side), equivalent to the one shown in figure 6, for providing guidance during the manufacturing process when the connector is placed in the first cover. As shown in figure 20, the cover may have a step which abuts against the end of the connector, thereby providing further stability. The connector in these embodiments is electrically compatible with a standard PCMCIA connector and can be physically connected to a standard PCMCIA socket.

Figures 21, 22 and 23 show another arrangement, made in another embodiment, for having the covers and the connector cooperate with each other to provide a robust and rigid contacting unit. In this embodiment a lip is not required as the covers do not need to overlap the connector. Figure 22 shows the whole length (P) of the connector is visible because there is no overlap of the covers over the connector. In this embodiment the flange is of a different design. Here the flange is bigger as it now serves the purpose of providing the necessary robustness and rigidness of the contacting unit, which is different from the purpose of the flange in the embodiment mentioned above. The flange in this embodiment may still be used for guidance, but its function is now also to provide attach points between the connector and at least one of the covers, thereby providing the necessary rigidity and robustness of the unit, with the connector firmly and securely held in place on the cover. Figure 23 shows the flange in more detail, showing how it fits in relation with the first cover. In this example guides can also be seen, close to the flange, to assist in guiding the first and second covers onto each other during manufacture. There are also guides for the flange. Weld points can also be seen for attaching the two covers together. In this embodiment the connector can have its full height since the covers do not overlap over the cover. It is the positioning of the flanges within their location shapes on the cover and the attachment of the covers to each other which allows for the connector to be robustly attached to the unit. As such, it can be said the connector has a coupling region adapted to cooperate with at least one of the covers to provide a robust connection between the cover, or covers, and the connector. In one embodiment the coupling region of the connector is the top or top and bottom parts of the connector, where the height (thickness) has been reduced. In a variation of this, the coupling region may also include all or part of the flange. In another embodiment the coupling region of the connector is the flange or flanges. The flanges in this embodiment may be called reinforced flanges, since they have to provide all of the required robustness to achieve the required stability.

In embodiments which have a connector whose coupling region includes reinforced flanges, it can be said that the flanges are adapted to cooperate with a cover in the sense that the flanges fit into the plastic reception shapes placed on the surface of a cover, thereby providing the required stability of the connector within the unit. The circuit board is preferably soldered to the connector to provide the electrical connectivity between the electronic circuit and the host device. In embodiments in which the connector has a lip, the coupling region is the part of the flat surface of the connector which overlaps with an end of the cover or covers. Here it can be said that the cooperation of the connector and the cover is by virtue of the surface area provided at the overlap, which provides the required stability. In some embodiments where the connector has such a lip, the connector may also comprise one or more flanges. In this case the coupling region includes the overlapping part of the surface of the connector with the cover, as well as the flange or flanges which fit into their respective reception shapes on a cover. If there is a step in the cover, this may also be said to form part of the coupling region. The required stability of the unit is provided by a combination of the two features in this embodiment (overlap and flange or overlap/step and flange).

In all embodiments, attachment and guidance features appear on parallel, opposite-facing surfaces of the covers. Adequate space for achieving sufficiently strong attachment and coupling of the covers and connector is provided by having a reduced size of circuit board.

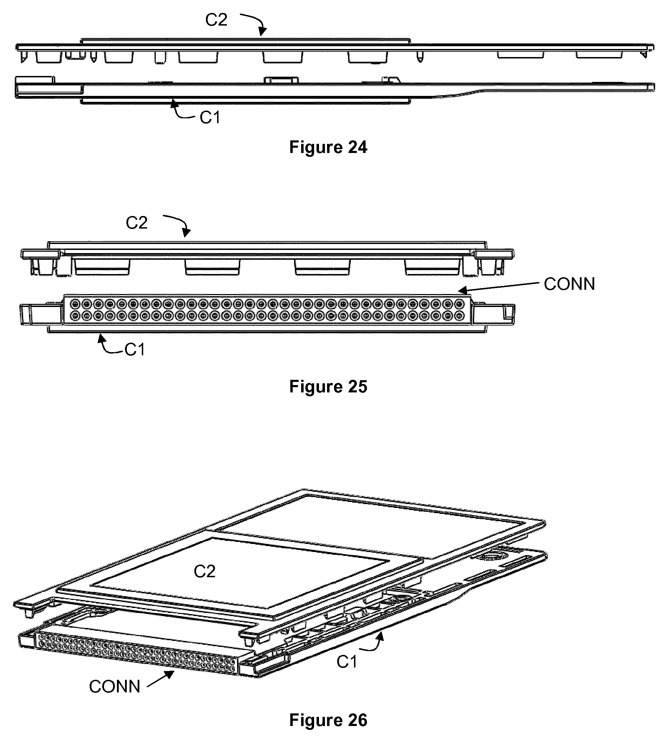

Figures 24, 25 and 26 give side, end and three-dimensional views, respectively, of part of a manufacturing process for attaching the covers together to enclose the connector and circuit board. The connector and circuit board are placed into the first cover and then the second cover is placed onto the first cover to sandwich the connector and circuit board within the unit. Solder points for attaching the covers can be seen, as well as locating features to facilitate the guidance of the covers onto each other.

The attachment regions shown on the first and second covers of figures 24, 25 and 26 are shown to include various combinations of plastic attachment parts and plastic locating elements thereon to provide guidance of the covers onto each other and to provide suitable attachment, either by welding, soldering, adhesion or latching. Once sealed, the contacting units of this embodiment do not allow for a smartcard or a SIM card to be introduced. This embodiment is therefore suitable for card-less applications which do not need an external, removable security element to be inserted. The attachment of the flanges to the cover, shown in figure 23 may be made by welding, as described above. In other embodiments however, this attachment may equally be provided by adhesive, soldering or latching.

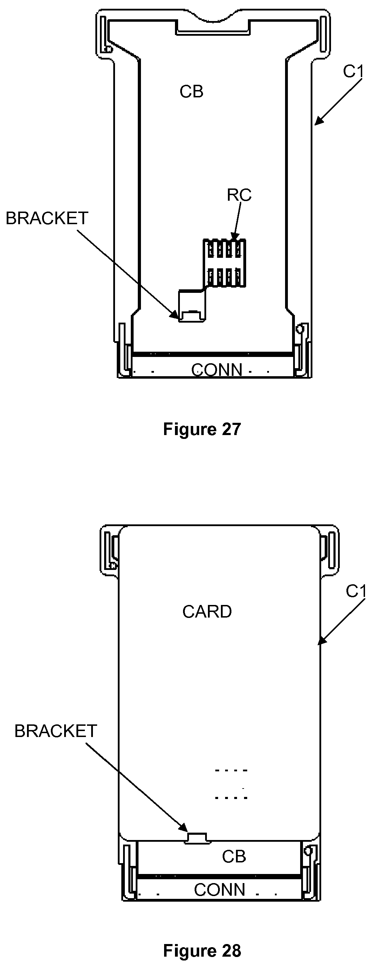

Other embodiments are provided for use with an external electronic module, usually a security module or memory or other electronic module required to cooperate with the electronic circuit on the circuit board to provide security functions. For example, figure 27 shows a cover of an embodiment of a PCMCIA contacting unit for use with a smartcard. In this embodiment, the attachment areas are still on the flat surfaces of parts of opposite covers facing each other. Again the circuit board has to be adapted to accommodate the attachment areas. In this embodiment, the circuit board is shown with resilient contacts (RC) which urge against corresponding pads of the smartcard when it is inserted into a suitable slot in the casing between the first and second covers. Figure 28 shows how the smartcard sits when inserted, with its pads urged against the resilient contacts and an edge of the end of the card being held in a suitably positioned bracket (BRACKET). In this example, the bracket serves to urge the pads of the smartcard against the resilient contacts of the circuit board. Any other means for urging the pads against the contacts may be deployed, such as for example an element placed on the opposite cover, arranged to exert pressure on the card towards the resilient contacts when the card is inserted into the unit.

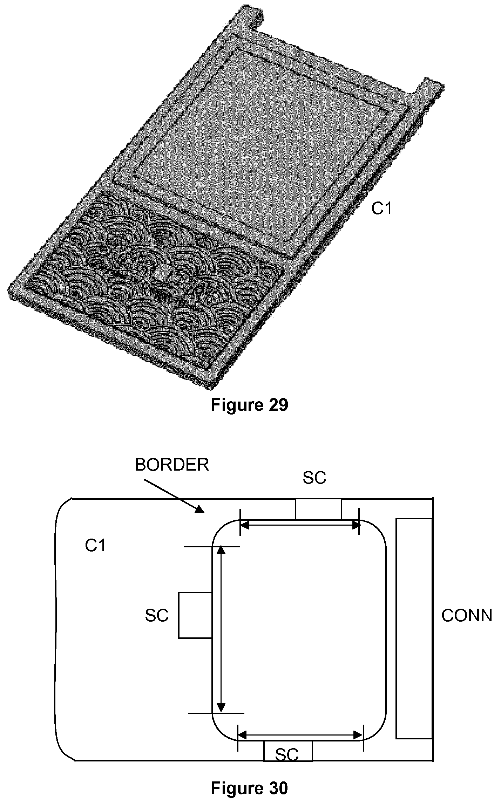

Other embodiments for use with an external electronic module (or external circuit) are provided. In figure 30, for example, another embodiment is shown. This embodiment is similar to the one shown in figures 24 to 26, but with a small adaptation whereby provision is made to insert a SIM card or a micro SIM card into the unit through a suitable slot provided in either of the covers at the junction where a change in height of different parts of the cover occurs. A suitable opening for the external electronic module (e.g. SIM, micro-SIM) may be provided anywhere along the lines shown in figure 30 (SC).

Figures 27 and 28 show an embodiment of the contacting unit which is adapted to be used with a smartcard, where the smartcard may house a security chip for example. Figure 30 shows an embodiment which is adapted to be used with a SIM card or micro-SIM card, either of which could house the external security chip. Figure 26 shows one example of an embodiment which is configured to be used without the use of any external security chip. As such, this embodiment is configured to function without an external security chip and is therefore configured to function without physical contact between the electronic circuit of the contacting unit and an external element such as a SIM card, micro-SIM card or smartcard with the security chip housed thereupon. In this embodiment the electronic circuit of the contacting unit is sufficiently enclosed by the casing so as to prevent insertion of the external element towards the interior of the casing. In other words, this embodiment of the contacting unit is devoid of any slot for receiving a security chip.

Assembly processes used for embodiments of the PCMCIA contacting unit include attaching the PCMCIA connector to an end of the circuit board; placing the board and connector assembly into one of the covers; guiding the opposite cover on top of the cover with its board/connector assembly installed and attaching the covers together using any of the suitable processes for attaching the plastic parts, such as latching, hot welding, spot welding, ultrasound welding or adhesive attachement.

During manufacture of the contacting units disclosed herein, the same tools can be used to provide a variety of different products to meet different customers' needs. This provides for cost savings and flexibility in manufacturing. For achieving the different colours of contacting units, the plastic may be painted, which is particularly suited for contacting units whose covers are latched together, or the plastic raw material can be coloured, which is suitable for units which are either latched shut or which are welded shut. Figure 29 shows an example of a cover for a contacting unit, which has been customised by providing a specific texture to the plastic. This cannot be achieved using metal covers for the contacting unit.

According to some embodiments, the plastic covers may comprise metal parts, as long as the attachment between the covers takes place at plastic parts of the covers.

EMI shielding can be provided to any of the embodiments described herein by providing metalised regions within the plastic of the covers or as a layer on a surface of the covers. The metalised regions can be continuous sheets or foil, wires, wire matrix or dispersed particles of metal within or on the plastic covers.

According to a variation of an embodiment suitable for card-less configurations, a wireless antenna may be directly integrated onto one or other or both of the plastic covers. This can be achieved through laser direct structuring techniques. In this way a WiFi connection between the contacting unit and the host device may be achieved for example.

## Claims

1. A contacting unit for an electronic circuit, the contacting unit extending lengthwise between first and second ends and widthwise between first and second sides, the contacting unit comprising:
a circuit board for the electronic circuit;
a connector connected to the circuit board for providing electrical contact between the electronic circuit and a host device, and
a casing comprising a first cover and a second cover, the electronic circuit and the circuit board being sandwiched between the first and second covers, at least part of the contacting unit thereby having a first height which is sufficient to cover the electronic circuit and the circuit board;
the contacting unit **characterised in that**:
the first and second covers are made at least partially from plastics, the covers being configured to be attached to each other at a plurality of attachment regions of the first and second covers such that said attachment is made between parallel-opposing plastic parts of the first and second covers within one or more of the attachment regions;
the circuit board having a form which is adapted to expose at least one of said attachment regions to allow for said attachment of the first and second covers;
the connector having a coupling region adapted to cooperate with at least one from the first or second covers to secure the connector in place.

2. The contacting unit according to claim 1, wherein the cover attachment region is located on each of the covers between a part of an edge of the circuit board and a corresponding part of an edge of the respective cover.

3. The contacting unit according to any of the previous claims, wherein at least one cover attachment region of the first cover and a corresponding cover attachment region of the second cover comprise locating elements configured to cooperate with each other to guide the covers to predetermined positions for attachment of the covers to one another.

4. The contacting unit according to any of the preceding claims, the unit having a second height at locations coinciding with attachment regions of its covers, said second height being less than the first height.

5. The contacting unit according to claim 4, wherein any of the attachment regions has a width extending from its corresponding part of the edge of the circuit board to the corresponding edge of the respective cover, the corresponding edge of the contacting unit having the second height across the entire width of the corresponding attachment region.

6. The contacting unit according to any of the preceding claims, wherein the first and second covers are configured to be attached by at least one of: a spot weld, an ultrasound weld, an adhesive attachment, a snap-fit, or a latch.

7. The contacting unit according to any of the preceding claims, the casing comprising a slot at one end for insertion of a smartcard, the contacting unit having a set of resilient contacts arranged to provide physical and electrical contact between one or more contact pads of the smartcard and the electronic circuit.

8. The contacting unit according to claim 7, the first end having a width substantially equal to the width of the smartcard, the second end having a width greater than the width of the smartcard, the attachment regions being provided: at the first end of the contacting unit within areas at the edges of the smartcard in the width direction; and at the second end of the contacting unit within areas separated from each other in a width direction by a distance which is greater than the width of the smartcard.

9. The contacting unit according to any of claims 4 to 6, the first cover or the second cover having a slot for inserting an external circuit, the slot being located at a junction where the cover height changes from the first height to the second height.

10. The contacting unit according to any of claims 1 to 6, the electronic circuit being configured to function without physical contact between the electronic circuit and an external element, the electronic circuit being sufficiently enclosed by the casing to prevent insertion of the external element towards the interior of the casing.

11. The contacting unit according to any of claims 1 to 3, 9 or 10, wherein the first cover has a first length and the second cover has a second length less than or equal to the first length.

12. The contacting unit according to any of the preceding claims, wherein the electronic circuit is a conditional access module for providing decryption functionality to give secure access to protected digital media content.

13. The contacting unit according to any of the preceding claims, wherein the connector coupling region is provided at least on a face of the connector, the connector coupling region adapted to cooperate with a surface of one of the covers.

14. The contacting unit according to any of the preceding claims, wherein the connector comprises a flange on each side, thereby providing the coupling region, the flanges being adapted to cooperate with plastic reception shapes placed on the surface of at least one of the covers.

15. The contacting unit according to any of the preceding claims, wherein the contacting unit is compatible with a Personal Computer Memory Card International Association "PCMCIA" specification.
